# EUROPÄISCHE PATENTSCHRIFT

(11) **EP 2 389 519 B1**
(45) Veröffentlichungstag und Bekanntmachung des Hinweises auf die Patenterteilung: **06.01.2016**
(21) Anmeldenummer: 10704491.9
(22) Anmeldetag: 14.01.2010
(51) Int. Cl.: F16B 11/00

(54) **MONTAGESYSTEM**
MOUNTING SYSTEM
SYSTÈME DE MONTAGE

(30) Priorität: 26.01.2009 DE 202009000057 U
(43) Veröffentlichungstag der Anmeldung: 30.11.2011
(73) Patentinhaber: Wenko-Wenselaar GmbH & Co. KG, 40721 Hilden (DE)
(72) Erfinder: KÖLLNER, Hanns-Joachim, 40625 Düsseldorf (DE)
(74) Vertreter: Kreuzkamp, Markus
(86) Internationale Anmeldenummer: PCT/DE2010/075004
(87) Internationale Veröffentlichungsnummer: WO 2010/083824

(56) Entgegenhaltungen:
- WO-A1-01/81774
- WO-A1-03/036106
- DE-A1- 10 152 053
- US-A- 3 532 316

## Beschreibung

Die vorliegende Erfindung betrifft ein Montagesystem zur Anbringung von Halterungselementen an einem Untergrund umfassend ein Befestigungselement mit einem tellerartigen Grundkörper mit einer Einfüllöffnung zur Einbringung eines Haftmittels zwischen Untergrund und Befestigungselement, wobei der Grundkörper eine zum Untergrund hin offene Ausnehmung aufweist, die das eingebrachte Haftmittel aufnimmt und wobei der Grundkörper Mittel zur Verbindung wenigstens eines Halterungselements mit dem Befestigungselement aufweist.

Aus dem Stand der Technik sind Montagesysteme der eingangs genannten Art bekannt geworden, die dazu geeignet sind, Gegenstände verschiedenster Art über Halterungselemente an einem Untergrund, beispielsweise an einer Wand anzubringen. Diese Art der Befestigung ist insbesondere dort vorteilhaft, wo der Untergrund mit beispielsweise Fliesen oder Kacheln verkleidet ist, so dass man bei einer herkömmlichen Befestigung mittels Schrauben und Dübel in diese Fliesen hinein bohren müsste. Um dies zu Vermeiden wurden entsprechende Montagesysteme entwickelt, die eine Befestigung am Untergrund über eine Klebeverbindung ermöglichen, so dass keine Bohrlöcher erforderlich sind.

In der WO 03/036106 A1 ist ein Montagesystem der eingangs genannten Gattung beschrieben, bei dem ein Haftmittel (Kleber) über eine Einfüllöffnung in eine der Wand zugewandte Ausnehmung eines Grundkörpers des Befestigungsmittels eingefüllt wird, so dass sich nach Aushärten des Haftmittels eine feste Verbindung zwischen Grundkörper und Untergrund ergibt. Man kann dann ein kappenförmiges Verschlussteil auf den befestigten Grundkörper aufschrauben. An dem Verschlusselement kann sich beispielsweise ein Gewindebolzen befinden, der zur Verbindung mit einem Teil einer Halterung eines Gebrauchsgegenstands dient.

Aus der DE 101 20 388 A1 ist ein ähnliches Montagesystem bekannt, bei dem der Grundkörper im Bereich des Einfüllkanals für das Haftmittel eine mittige Gewindebohrung aufweist, in die ein Halterungselement eingeschraubt werden kann. Hier muss allerdings nach dem Befüllen der Ausnehmung mit dem Haftmittel zunächst das Haftmittel aus dem Einfüllkanal verdrängt werden, wozu ein Verschlussstopfen in die Gewindebohrung eingeschraubt wird. Danach lässt man das Haftmittel aushärten, entfernt den Verschlussstopfen wieder und schraubt dann das Halterungselement in die Gewindebohrung ein.

Nachteilig an den bekannten Montagesystemen dieser Art ist, dass ein sauberes Einfüllen des Haftmittels in die Einfüllöffnung des Grundkörpers Schwierigkeiten bereiten kann. Das Haftmittel gelangt dabei in Bereiche, wo es unerwünscht ist und dies führt zu Verunreinigungen am Befestigungsmittel, die sich nach dem Aushärten kaum beseitigen lassen. Insbesondere sind auch Spuren des Haftmittels in dem Gewindebereich des Einfüllkanals nachteilig, da dieses Gewinde anschließend für die Befestigung des Halterungselements genutzt werden soll und ausgehärtetes Haftmittel im Gewindebereich den späteren Schraubvorgang erschwert.

Letztlich ist aus der US 3,532,316 A ein Montagesystem zur Anbringung von Halterungselementen an einem Untergrund bekannt, umfassend ein Befestigungselement mit einem tellerartigen Grundkörper mit einer Einfüllöffnung zur Einbringung eines Haftmittels zwischen Untergrund und Befestigungselement, wobei der Grundkörper eine zum Untergrund hin offene Ausnehmung aufweist, die das eingebrachte Haftmittel aufnimmt und wobei der Grundkörper Mittel zur Verbindung wenigstens eines Halterungselements mit dem Befestigungselement aufweist und das Montagesystem eine Tülle umfasst, die mit dem Grundkörper des Befestigungselements einerseits sowie mit einem das Haftmittel enthaltenden Behältnis andererseits jeweils kraftschlüssig und im wesentlichen flüssigkeitsdicht verbindbar ist.

Nachteilig bei diesem System ist, dass keine absolut sichere und für den Anwender einfach herstellbare Verbindung mit dem Grundkörper des Befestigungsmittels einerseits sowie mit dem das Haftmittel enthaltenen Behältnis andererseits besteht.

Hier setzt die vorliegende Erfindung ein. Aufgabe der vorliegenden Erfindung ist es, ein Montagesystem der eingangs genannten Gattung zur Verfügung zu stellen, bei dem ein sauberes akkurates Einfüllen des Haftmittels möglich ist unter Nutzung einer sicheren und für den Anwender leicht herstellbaren Verbindung.

Die Lösung dieser Aufgabe liefert ein Montagesystem der eingangs genannten Gattung mit den kennzeichnenden Merkmalen des Hauptanspruchs. Erfindungsgemäß ist vorgesehen, dass das Montagesystem eine Tülle umfasst, die mit dem Grundkörper des Befestigungselements einerseits sowie mit einem das Haftmittel enthaltenden Behältnis andererseits jeweils kraftschlüssig und im wesentlichen flüssigkeitsdicht verbindbar ist. Die erfindungsgemäße Lösung vereinfacht das akkurate Einbringen des Haftmittels in die Ausnehmung des Grundkörpers. Das Haftmittel wird ausschließlich in einen Kanal oder eine Einfüllöffnung des Grundkörpers eingebracht, welcher wiederum mit der Ausnehmung in Verbindung steht, wobei die Tülle im Bereich ihres einen Endes ein erstes Gewinde aufweist, welches einem Innengewinde im Bereich eines Kanals des Grundkörpers zugeordnet ist, wobei dieser Kanal über eine Öffnung mit der Ausnehmung des Grundkörpers, in die das Haftmittel eingefüllt wird, in Verbindung steht und dass weiterhin vorzugsweise die Tülle in einem Endbereich ein zweites Gewinde aufweist, das einem Gewinde im Verschlussbereich des Behältnisses zugeordnet ist, welches das Haftmittel enthält.

Besonders bevorzugt ist dabei, dass das Behältnis, welches das Haftmittel enthält als Tube ausgebildet ist und die Tülle nach Entfernung des Verschlussstopfens der Tube auf deren vorderes Ende aufschraubbar ist.

Das Montagesystem kann für den Kunden als Set mit der Tülle und einem Behältnis geliefert werden, welches das Haftmittel enthält, beispielsweise einer Tube mit Klebstoff oder dergleichen. Der Kunde schraubt dann beispielsweise die Verschlusskappe von der Tube und schraubt stattdessen die Tülle auf die Spitze der Tube auf. Das dann vordere Ende der Tülle kann er dann beispielsweise mit einem Innengewinde in einem Kanal des Grundkörpers verschrauben. Wird dann auf die Tube gedrückt, um das Haftmittel auszubringen, gelangt dieses unmittelbar durch das Innere der Tülle in die Ausnehmung des Grundkörpers. Bei geeigneter Dimensionierung der jeweiligen Gewinde kann man somit verhindern, dass Haftmittel ungehindert austritt und zu Verschmutzungen am Grundkörper oder an den Händen der Bedienungsperson führt. Außerdem kann man auch verhindern, dass Haftmittel in den Gewindebereich der Einfüllöffnung (des Kanals) des Grundkörpers gelangt und nach Aushärten die Gewindegänge verstopft.

Idealerweise entspricht dabei beispielsweise die axiale Länge des ersten Gewindes der Tülle wenigstens etwa der Länge des Innengewindes und der Tiefe des Kanals im Grundkörper. Die Tülle wird dann so weit in den Grundkörper eingeschraubt, dass das Haftmittel nicht mit dem Gewinde des zum Einfüllen dienenden Kanals in Berührung kommt. Im Anschluss an das erste Gewinde kann weiterhin bevorzugt an der Tülle ein Anschlag, insbesondere in Form eines Absatzes gebildet sein, so dass dadurch das Ende des Einschraubvorgangs bestimmt wird, wenn der Anschlag an einer Fläche des Grundkörpers zur Anlage kommt.

In der vorliegenden Anmeldung wird besonders bevorzugt eine Tülle verwendet, bei der das erste Gewinde ein Außengewinde und das zweite Gewinde ein Innengewinde ist. Das erste Gewinde kann dann in ein Innengewinde des Grundkörpers eingeschraubt werden, so dass sich mit diesem eine dichte Verbindung ergibt und das zweite Gewinde am anderen Ende der Tülle kann dann auf das an einer herkömmlichen Klebstofftube üblicherweise vorhandene Außengewinde für die Verschlusskappe aufgeschraubt werden, nachdem die Verschlusskappe der Tube entfernt wurde. Damit kann in sehr einfacher Weise eine kraftschlüssige und im wesentlichen flüssigkeitsdichte Verbindung zwischen einer Tube mit Haftmittel und der Ausnehmung des Grundkörpers hergestellt werden. Wenn man dann auf die Tube drückt, fließt der Klebstoff direkt bis in die Ausnehmung des Grundkörpers, ohne das Gewinde zu verschmutzen.

Um die Möglichkeit einer Verbindung mit dem Halterungselement zu schaffen, ist es erfindungsgemäß vorteilhaft, wenn vorgesehen ist, dass der Grundkörper an seiner dem Untergrund zugewandten Seite eine Mehrkantaussparung zur formschlüssigen Aufnahme eines Schraubenkopfs aufweist. In diesem Fall kann man bereits vor der Befestigung des Grundkörpers am Untergrund eine Schraube beispielsweise durch eine Bohrung des Grundkörpers stecken, und zwar derart, dass der Kopf der Schraube in der genannten Mehrkantaussparung formschlüssig aufgenommen wird und der Schaft der Schraube sich durch die Bohrung des Grundkörpers hindurch erstreckt. Nach der Befestigung des Grundkörpers verfügt man dann über ein an dessen dem Untergrund abgewandter Seite vorstehendes Gewinde nach Art eines Gewindebolzens, welcher drehfest mit dem Grundkörper verbunden ist. Diese Mehrkantaussparung kann beispielsweise zentrisch in der Ausnehmung und somit mittig im Grundkörper angeordnet sein.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte perspektivische Explosionsansicht der wesentlichen Elemente eines erfindungsgemäßen Montagesystems;
Figur 2 eine Schnittansicht durch den Grundkörper entlang der Linie II-II von Figur 1;
Figur 3 eine weitere Schnittansicht durch den Grundkörper entlang der Linie III-III von Figur 1;
Figur 4 eine vergrößerte Ansicht der Tülle des erfindungsgemäßen Montagesystems.

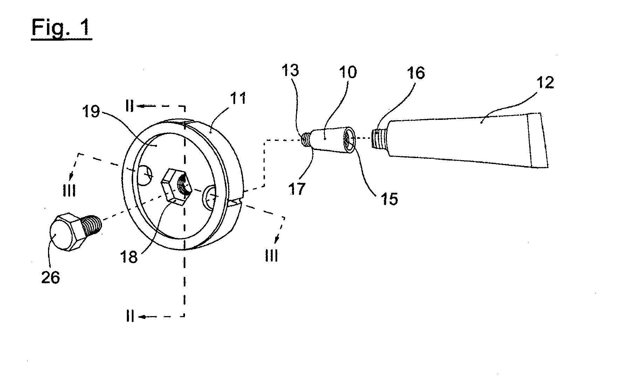

Zunächst wird auf Figur 1 Bezug genommen und anhand dieser werden die Bestandteile und die Funktionsweise des erfindungsgemäßen Montagesystems erläutert. Dieses Montagesystem umfasst ein Befestigungselement mit einem zylindrischen tellerartigen flachen Grundkörper 11, welcher durch Haftmittel und somit ohne zu Bohren an einem Untergrund wie beispielsweise einer gefliesten Wand anzubringen ist. Dazu weist dieser Grundkörper 11 an seiner dem Untergrund zugewandten Seite eine flache zylindrische Ausnehmung 19 auf, die mit dem Haftmittel gefüllt wird. Die Ausnehmung umgibt ein umlaufender ringförmiger Streifen aus einer Klebeschicht 22, so dass man durch Anpressen des Grundkörpers 11 an den Untergrund zunächst eine Vormontage vornehmen kann, bevor man dann das Haftmittel in die Ausnehmung 19 einfüllt.

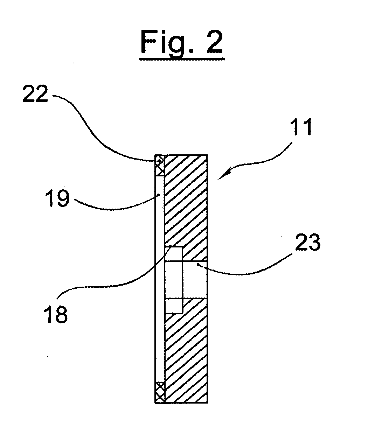

Um später an dem Grundkörper ein hier nicht dargestelltes Halterungselement befestigen zu können, weist der Grundkörper 11 weiterhin an seiner dem Untergrund zugewandten Seite beispielsweise etwa mittig eine Mehrkantaussparung 18 auf, die geeignet ist, einen Schraubenkopf 26 einer Schraube formschlüssig und somit unverdrehbar aufzunehmen. Der Schaft dieser Schraube kann durch die in Figur 2 erkennbare zentrische Bohrung 23 des Grundkörpers hindurch ragen, die sich axial an die Mehrkantaussparung 18 anschließt, so dass der Schaft nach der Anbringung des Grundkörpers an dessen dem Untergrund abgewandter Seite wie ein Gewindebolzen vorsteht. Somit kann man dann später beispielsweise ein mit einem Innengewinde versehenes Halterungselement auf diesen Gewindebolzen (den überstehenden Schaft der Schraube 26) aufschrauben.

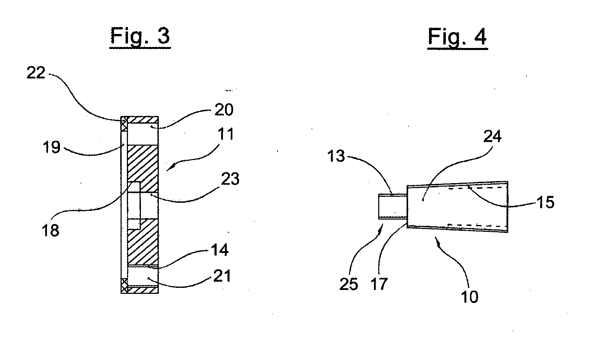

Es ist wird nun weiterhin auf Figur 1 sowie die Detailansichten Figuren 2 bis 4 Bezug genommen. Das erfindungsgemäße Montagesystem umfasst weiterhin eine Tülle 10, die auf ein Behältnis, beispielsweise eine Tube 12, welche Klebstoff enthält, aufgeschraubt werden kann, nachdem man den Verschluss der Tube abgeschraubt hat. Die Tülle 10 verlängert dann nach dem Aufschrauben das vordere Ende der Tube 12. An ihrem vorderen Ende weist die Tülle 10 ein Außengewinde 13 auf (siehe auch Figur 4), welches in ein entsprechendes Innengewinde 14 eines Kanals 21 in dem Grundkörper 11 (siehe Figur 3) eingeschraubt werden kann, wodurch die Tülle kraftschlüssig und im wesentlichen flüssigkeitsdicht mit dem Grundkörper 11 verbunden wird, so dass dann das Haftmittel eingefüllt werden kann.

Bei der Montage des erfindungsgemäßen Systems geht man also folgendermaßen vor. Man steckt die Schraube 26 durch den Grundkörper, so dass deren Kopf von der Mehrkantaussparung 18 aufgenommen wird. Dann drückt man die Klebeschicht 22 des Grundkörpers 11 an den Untergrund, um den Grundkörper in seiner gewünschten Position vorzufixieren. Danach nimmt man den Verschluss von der Tube 12 und schraubt stattdessen die Tülle 10 mit ihrem Innengewinde 15 (siehe Figur 4) (zweites Gewinde im Sinne der Definition in den Ansprüchen der vorliegenden Anmeldung) auf das Außengewinde 16 am vorderen Ende der Tube 12 auf. Dann schraubt man das vordere mit dem Außengewinde 13 (erstes Gewinde gemäß der Definition in den Ansprüchen der vorliegenden Anmeldung) versehene Ende der Tülle 10 in das in Figur 3 sichtbare Innengewinde 14 in dem als Einfüllöffnung dienenden Kanal 21 des Grundkörpers. Die Tülle 10 ist dann fest und dicht mit dem Grundkörper 11 verbunden. Wenn man dann auf die Tube 12 drückt, tritt der Klebstoff (Haftmittel) am vorderen Ende aus und gelangt durch das Innere der Tülle direkt in die Ausnehmung 19, ohne dass das Haftmittel das Innengewinde verschmutzen kann. Die Tülle 10 kann nach Beendigung des Einfüllvorgangs herausgeschraubt werden. Nach dem Aushärten des Haftmittels in der Ausnehmung 19 ist eine flächige stoffschlüssige Verbindung des Grundkörpers 11 mit dem Untergrund gegeben. Man kann dann auf das durch die zentrische Bohrung 23 des Grundkörpers ragende Gewinde der Schraube 26 ein Halterungselement aufschrauben.

Die Tülle 10 ist in Figur 4 noch einmal vergrößert dargestellt. Man erkennt hier, dass die Tülle 10 einen leicht konisch sich zum vorderen Ende hin verjüngenden Korpus 24 aufweist, innerhalb dessen sich das Innengewinde 15 (zweites Gewinde) befindet. Am vorderen Ende der Tülle befindet sich ein schmalerer zylindrischer vorderer Abschnitt 25, der das Außengewinde 13 (erstes Gewinde) aufweist und entsprechend dem Durchmesser des Kanals 21 dimensioniert ist. Zwischen diesem innen hohlen vorderen Abschnitt 25 und dem natürlich ebenfalls innen hohlen konischen Korpus 24 befindet sich ein Absatz 17, so dass man die Tülle 10 so weit in den Kanal 21 der Einfüllöffnung einschrauben kann, bis der Absatz 17 an dem Grundkörper 11 zum Anschlag kommt.

Wie Figur 3 zeigt, hat der Grundkörper noch ein oder mehrere weitere Löcher, die als Entlüftungslöcher 20 dienen, so dass beim Aushärten des Klebstoffs entstehende Gase durch diese Löcher aus der Ausnehmung 19 entweichen können.

### Bezugszeichenliste

- 10: Tülle
- 11: Grundkörper
- 12: Behältnis (Tube)
- 13: erstes Gewinde
- 14: Innengewinde
- 15: zweites Gewinde
- 16: Außengewinde
- 17: Absatz
- 18: Mehrkantaussparung
- 19: Ausnehmung
- 20: Entlüftungsloch
- 21: Kanal (Einfüllöffnung)
- 22: Klebeschicht
- 23: zentrische Bohrung
- 24: konischer Korpus
- 25: vorderer Abschnitt
- 26: Schraube

## Patentansprüche

1. Montagesystem zur Anbringung von Halterungselementen an einem Untergrund umfassend ein Befestigungselement mit einem tellerartigen Grundkörper mit einer Einfüllöffnung zur Einbringung eines Haftmittels zwischen Untergrund und Befestigungselement, wobei der Grundkörper eine zum Untergrund hin offene Ausnehmung aufweist, die das eingebrachte Haftmittel aufnimmt und wobei der Grundkörper Mittel zur Verbindung wenigstens eines Halterungselements mit dem Befestigungselement aufweist und das Montagesystem eine Tülle (10) umfasst, die mit dem Grundkörper (11) des Befestigungselements einerseits sowie mit einem das Haftmittel enthaltenden Behältnis (12) andererseits jeweils kraftschlüssig und im wesentlichen flüssigkeitsdicht verbindbar ist, **dadurch gekennzeichnet, dass** die Tülle (10) im Bereich ihres einen Endes ein erstes Gewinde (13) aufweist, welches einem Innengewinde(14) im Bereich eines Kanals des Grundkörpers (11) zugeordnet ist, wobei dieser Kanal über eine Öffnung mit der Ausnehmung des Grundkörpers, in die das Haftmittel eingefüllt wird, in Verbindung steht.

2. Montagesystem nach Anspruch 1, **dadurch gekennzeichnet, dass** die Tülle (10) in einem Endbereich ein zweites Gewinde (15) aufweist, das einem Gewinde (16) im Verschlussbereich des Behältnisses (12) zugeordnet ist, welches das Haftmittel enthält.

3. Montagesystem nach Anspruch 2, **dadurch gekennzeichnet, dass** das Behältnis (12), welches das Haftmittel enthält als Tube ausgebildet ist und die Tülle (10) nach Entfernung des Verschlussstopfens der Tube auf deren vorderes Ende aufschraubbar ist.

4. Montagesystem nach einem der Ansprüche 1 bis 3, **dadurch gekennzeichnet, dass** die axiale Länge des ersten Gewindes (13) der Tülle (10) wenigstens etwa der Länge des Innengewindes (14) und der Tiefe des Kanals im Grundkörper (11) entspricht.

5. Montagesystem nach einem der Ansprüche 1 bis 4, **dadurch gekennzeichnet, dass** im Anschluss an das erste Gewinde (13) an der Tülle (10) ein Anschlag, insbesondere in Form eines Absatzes (17) gebildet ist.

6. Montagesystem nach einem der Ansprüche 2 bis 5, **dadurch gekennzeichnet, dass** das erste Gewinde (13) der Tülle (10) ein Außengewinde und das zweite Gewinde (15) der Tülle ein Innengewinde ist.

7. Montagesystem nach einem der Ansprüche 1 bis 6, **dadurch gekennzeichnet, dass** der Grundkörper an seiner dem Untergrund zugewandten Seite eine Mehrkantaussparung (18) zur formschlüssigen Aufnahme eines Schraubenkopfs aufweist.

8. Montagesystem nach Anspruch 7, **dadurch gekennzeichnet, dass** die Mehrkantaussparung (18) zentrisch im Bereich der Ausnehmung (19) angeordnet ist.

## Claims

1. Mounting system for attaching holding elements to a substrate, comprising a fastening element having a disc-like basic body with a filling opening for introducing an adhesive between the substrate and fastening element, wherein the basic body has a recess which is open to the substrate and which receives the introduced adhesive, and wherein the basic body has means for connecting at least one holding element to the fastening element, and the mounting system comprises a nozzle (10) which can be connected to the basic body (11) of the fastening element on the one hand and to an adhesive-containing container (12) on the other hand, in each case in a frictional and substantially liquid-tight manner, **characterized in that** the nozzle (10) has, in the region of one of its ends, a first thread (13) which is assigned to an internal thread (14) in the region of a channel of the basic body (11), wherein this channel is connected via an opening to the recess of the basic body into which the adhesive is filled.

2. Mounting system according to Claim 1, **characterized in that** the nozzle (10) has, in an end region, a second thread (15) which is assigned to a thread (16) in the closure region of the container (12) which contains the adhesive.

3. Mounting system according to Claim 2, **characterized in that** the container (12) which contains the adhesive takes the form of a tube, and the nozzle (10) can be screwed onto the front end of the tube after its closure stopper has been removed.

4. Mounting system according to one of Claims 1 to 3, **characterized in that** the axial length of the first thread (13) of the nozzle (10) corresponds at least approximately to the length of the internal thread (14) and to the depth of the channel in the basic body (11).

5. Mounting system according to one of Claims 1 to 4, **characterized in that** a stop, in particular in the form of a shoulder (17), is formed on the nozzle (10) so as to adjoin the first thread (13).

6. Mounting system according to one of Claims 2 to 5, **characterized in that** the first thread (13) of the nozzle (10) is an external thread and the second thread (15) of the nozzle is an internal thread.

7. Mounting system according to one of Claims 1 to 6, **characterized in that** the basic body has, on its side facing the substrate, a polygonal cutout (18) for positively receiving a screw head.

8. Mounting system according to Claim 7, **characterized in that** the polygonal cutout (18) is arranged centrally in the region of the recess (19).

## Revendications

1. Système de montage pour monter des éléments de retenue sur un subjectile, comprenant un élément de fixation avec un corps de base de type plateau avec une ouverture de remplissage pour l'introduction d'un adhésif entre le subjectile et l'élément de fixation, le corps de base présentant un logement ouvert en direction du subjectile, lequel reçoit 1"adhésif introduit et le corps de base présentant des moyens pour la connexion d'au moins un élément de retenue à l'élément de fixation et le système de montage comprenant une douille (10) qui peut être connectée au corps de base (11) de l'élément de fixation d'une part ainsi qu'à un récipient (12) contenant l'adhésif d'autre part à chaque fois par engagement par force et essentiellement de manière étanche aux liquides, **caractérisé en ce que** la douille (10) présente, dans la région de l'une de ses extrémités, un premier filetage (13) qui est associé à un filetage intérieur (14) dans la région d'un canal du corps de base (11), ce canal étant en liaison par le biais d'une ouverture avec le logement du corps de base dans lequel est introduit l'adhésif.

2. Système de montage selon la revendication 1, **caractérisé en ce que** la douille (10) présente, dans une région d'extrémité, un deuxième filetage (15) qui est associé à un filetage (16) dans la région de fermeture du récipient (12) qui contient l'adhésif.

3. Système de montage selon la revendication 2, **caractérisé en ce que** le récipient (12) qui contient l'adhésif est réalisé sous forme de tube et la douille (10), après l'enlèvement du bouchon de fermeture du tube, peut être vissée sur l'extrémité avant de celui-ci.

4. Système de montage selon l'une quelconque des revendications 1 à 3, **caractérisé en ce que** la longueur axiale du premier filetage (13) de la douille (10) correspond au moins approximativement à la longueur du filetage intérieur (14) et à la profondeur du canal dans le corps de base (11).

5. Système de montage selon l'une quelconque des revendications 1 à 4, **caractérisé en ce qu'**une butée, en particulier sous la forme d'un épaulement (17), est formée à la suite du premier filetage (13) au niveau de la douille (10).

6. Système de montage selon l'une quelconque des revendications 2 à 5, **caractérisé en ce que** le premier filetage (13) de la douille (10) est un filetage extérieur et le deuxième filetage (15) de la douille est un filetage intérieur.

7. Système de montage selon l'une quelconque des revendications 1 à 6, **caractérisé en ce que** le corps de base présente, au niveau de son côté tourné vers le subjectile, un évidement polygonal (18) pour recevoir par engagement par correspondance de formes une tête de vis.

8. Système de montage selon la revendication 7, **caractérisé en ce que** 1"évidement polygonal (18) est disposé centralement dans la région du logement (19).
